# EUROPÄISCHE PATENTSCHRIFT

(11) **EP 0 963 352 B1**
(45) Veröffentlichungstag und Bekanntmachung des Hinweises auf die Patenterteilung: **21.11.2001**
(21) Anmeldenummer: 97903195.2
(22) Anmeldetag: 28.02.1997
(51) Int. Cl.: C02F 3/12, C02F 3/30, C02F 3/00, C02F 3/02

(54) **MODULARE KLÄRANLAGE UND VERFAHREN ZU IHREM BETRIEB**
MODULAR WATER TREATMENT PLANT AND METHOD FOR OPERATING SAME
STATION D'EPURATION MODULAIRE ET PROCEDE PERMETTANT DE LA FAIRE FONCTIONNER

(43) Veröffentlichungstag der Anmeldung: 15.12.1999
(73) Patentinhaber: Kahr, Rudolf, 5730 Mittersill (AT); Oloid AG, 4053 Basel (CH)
(72) Erfinder: KAHR, Rudolf, A-5730 Mittersill (AT); LANGSCHEID, Tobias, CH-4053 Basel (CH)
(86) Internationale Anmeldenummer: CH9700077
(87) Internationale Veröffentlichungsnummer: WO9834879

(56) Entgegenhaltungen:
- DE-A- 4 419 917
- US-A- 3 210 053
- US-A- 5 186 821

## Beschreibung

Die vorliegende Erfindung bezieht sich auf Kleinkläranlagen nach dem Belebtschlamm-Verfahren im Grössenbereich von 5 ö 600 EGW (Einwohnergleichwerte). Solche Anlagen sind an sich bekannt und arbeiten, je nach Grösse, mit einem bis drei Becken.

Sind drei Becken vorhanden, so strömt das zu reinigende Abwasser nach Passieren des Rechens in das eigentliche Klärbecken, in welchem Bakterien den aeroben Abbau der das Abwasser belastenden Stoffe besorgen. Dieser Abbau wird gefördert und unterstützt durch eingebrachten Luftsauerstoff, der einerseits für den Metabolismus der Bakterien notwendig ist, anderseits für den Nitrifikationsprozess, in welchem Stickstoffverbindungen über eine Nitrit-Zwischenstufe zu Nitrat oxidiert werden. Danach strömt das Abwasser und die darin schwebenden Schlammflocken in ein zweites, das Nachklärbecken, in welchem durch die Tätigkeit der Bakterien aus den Nitraten der gebundene Sauerstoff metabolisiert und Stickstoff freigesetzt wird. Dabei setzt sich der Schlamm ab und wird durch geeignete Pumpen in das erste Becken zurückbefördert; Ueberschuss-Schlamm wird ausgelagert und einer weiteren Behandlung zugeführt. Das dritte Becken dient lediglich der Beruhigung und dem Abzug des geklärten Wassers; gelegentlich ist dieses dritte Becken lediglich als Teil des zweiten ausgeführt.

Die aerobe Phase der Abwasser-Klärung wird häufig - besonders in Anlagen über etwa 50 EGW - durch forcierte Aeration unterstützt, sei dies durch Einblasen von Luft beispielsweise durch unten im Becken eingelegte Rohre oder durch propellerartige Systeme, die die Luft von der Oberfläche her in das Becken einbringen. Die anoxische Phase wird unterstützt durch Rührvorrichtungen, welche die Denitrifikation unterstützen, indem Schichtbildung im entsprechenden Becken verhindert wird.

Die heute eingesetzten Mittel sowohl zur Aeration als auch zur Denitrifikation haben, besonders augenfällig bei Kleinkläranlagen, den Nachteil des grossen apparativen Aufwandes einerseits und der grossen Unterhaltskosten anderseits, insbesondere für die aufzuwendende Energie. Ferner ist der bauliche Aufwand für zwei bis drei Becken beträchtlich und oft ein Hinderungsgrund für das Erstellen einer Anlage.

Die Aufgabe der vorliegenden Erfindung ist es eine Kläranlage nach dem Belebtschlammverfahren zu schaffen, die bei kleinem Investitionsaufwand baulicher und apparativer Ursache energiesparsam betrieben werden kann und hervorragende Abwasserund Schlammqualität liefert.

Die Lösung der gestellten Aufgabe ist wiedergegeben im Patentanspruch 1 hinsichtlich der wesentlichen Merkmale der geschaffenen Vorrichtungtung, in Patentanspruch 2 bis 9 hinsichtlich weiterer vorteilhafter Ausbildungen und in den Patentansprüchen 10 bis 13 hinsichtlich des Verfahrens zum Betrieb der erfindungsgemässen Kleinkläranlage.

Der Erfindungsgedanke wird näher ausgeführt anhand der beigefügten Zeichnungen. Es zeigen
- Fig. 1: einen Längsschnitt durch ein Klärbecken.
- Fig. 2a, b: ein erstes trichterförmiges Element in Perspektive und Längsschnitt.
- Fig. 3a, b: ein zweites trichterförmiges Element in Perspektive und Längsschnitt.

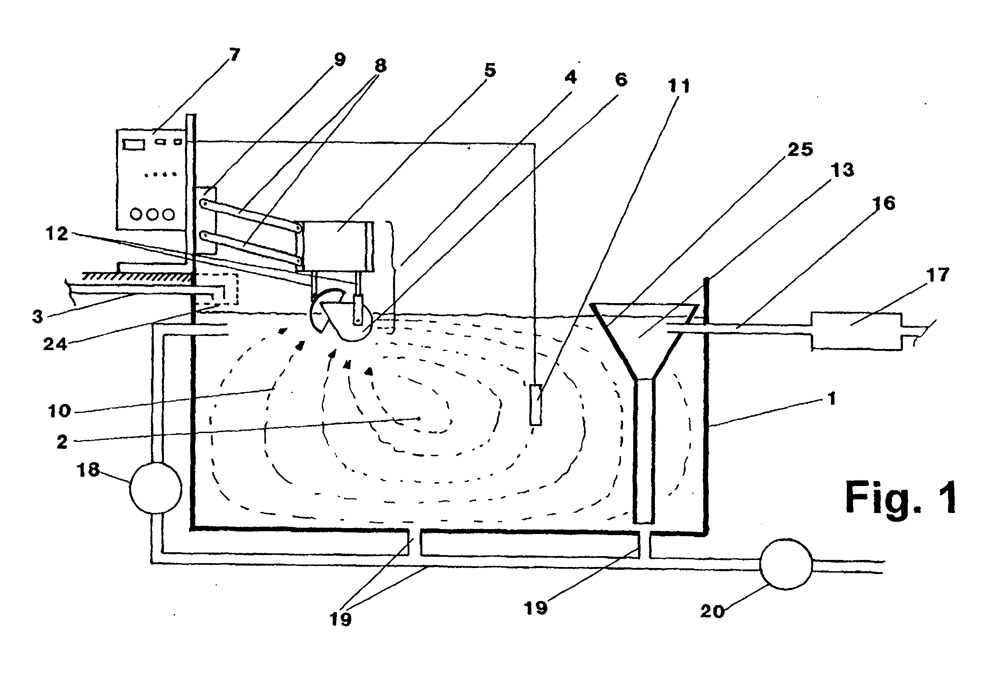

Die Darstellung von Fig. 1 ist jene einer Kleinkläranlage für etwa 5 bis 10 EGW. Hier findet der ganze Klärprozess, also aerobe Phase (Nitrifikation), anarobe Phase (Denitrifikation) und Beruhigung in einem einzigen Becken statt. Solche Anlagen sind vorgesehen insbesondere für Einzelhöfe und Strusiedelungen, die aus topografischen und wirtschaftlichen Gründen (Abwasserleitung) nicht an grössere oder kommunale Anlagen angeschlossen werden können.

Ein Becken 1 umfasst im wesentlichen die ganze Kläranlage. Es kann in konventioneller Weise aus Beton gefertigt sein - Ortsbeton oder als vorgefertigtes Element - oder auch als GFK-Modul (GFK = Glasfaserverstärkter Kunststoff). In das Becken 1 strömt durch eine Zuflussleitung 3 und einen Rechen 24 das zu klärende Abwasser 2. An einer schematisch dargestellten Hebevorrichtung 9 ist beispielsweise über eine Parallelführung 8 eine Rührvorrichtung 4 angelenkt. Diese weist einen Antrieb 5 auf, der einen inversionskinematischen Wälzkörper, ein sogenanntes Oloid 6 in die der Inversionskinematik eigene Taumelbewegung versetzt. Das Oloid 6 selbst ist bekannt aus CH 500 000; Antriebsvorrichtungen 5 sind mehrere bekannt, so z.B. aus WO 80/01830 und EP 0 584 301. Wird die Rührvorrichtung 4 so eingesetzt, dass das Oloid 6 zu etwa 1/3 eingetaucht und seine zwei gegenläufig bewegten mit der Ziffer 12 belegten Achsen mit 35 bis 120 U/min umlaufen, so entsteht die durch gestrichelte Linien 10 angedeutete Strömung im Becken 1. Anderseits wird durch die Bewegung des Oloides 6 an der Grenze Luft-Wasser eine enorme Oberflächenvergrösserung bewirkt und lokal - in der Abströmrichtung - eine starke vertikale Umwälzung des Abwassers. Dadurch wird, bei den genannten Parametern, ein Sauerstoffpegel von ca. 2 mg/l erzielt bei einer Leistungsaufnahme der Rührvorrichtung 4 mit ca. 15 cm Abstand der Achsen 12 von knapp 10 W. Der Sauerstoffgehalt des zu klärenden Abwassers wird durch einen O₂-Sensor 11 laufend oder periodisch gemessen und an eine Steuerung 7 übermittelt. Die Steuerung 7 enthält Mittel um die Rührvorrichtung 4 nach Massgabe des Sauerstoffgehaltes ein- und auszuschalten. Ferner enthält sie Mittel, um die Drehgeschwindigkeit des An, triebes 5 zu steuern; ebenfalls sind Mittel enthalten, um die Hebevorrichtung 9 parameter- oder zeitbeeinflusst zu steuern, dergestalt, dass das Oloid 6 in die beschriebene 1/3-Stellung, oder in eine noch zu erläuternde Tiefstellung gebracht werden kann. Während die beschriebene 1/3-Steilung bei 35 bis 120 U/min der Achsen 12 zur Aeration dient, wird die Rührvorrichtung 4 in der genannten Tiefstellung das Oloid 6 ganz eingetaucht lassen. Die Eintauchtiefe ist nicht besonders kritisch; sie muss jedoch gewährleisten, dass bei der gewählten Umlaufgeschwindigkeit der Achsen 12 das Oloid 6 stets von Wasser überdeckt bleibt. Praktisch hat sich eine Stellung bewährt, bei der das Oloid 6 um mindestens seine eigene Höhe von Wasser überdeckt ist. Die Drehzahl der Achsen 12 liegt hier im Bereich von 25 bis 90 U/min. In dieser Stellung wirkt die Rührvorrichtung 4 im wesentlichen nur als Rührer, die Aeration ist vernachlässigbar klein. Das Strömungsbild ist jenem in der Aerationsphase sehr ähnlich; lediglich die oberflächennahe Vertikalumwälzung fällt weg.

Mit Hilfe der beschriebenen Anlageteile lässt sich die Belebung (Nitrifikation) und die Denitrifikation im gleichen Becken mit der gleichen Vorrichtung im Wechsel betreiben, was die Anlage vereinfacht und verbilligt. Dank der kleinen Leistungsaufnahme der Rührvorrichtung 4 lässt sich die Anlage gut durch Photovoltaik-Elementen speisen. Soll der Betrieb auch über Nacht weiterlaufen, so ist die Anlage mit Batterien gepuffert und die Fläche der Sonnenkollektoren entsprechend ausgelegt. Die Leistungsersparnis in Bezug auf konventionelle beispielsweise Propeller-Rührwerke beträgt (einschlisslich der Steuerung 7} etwa 80%.

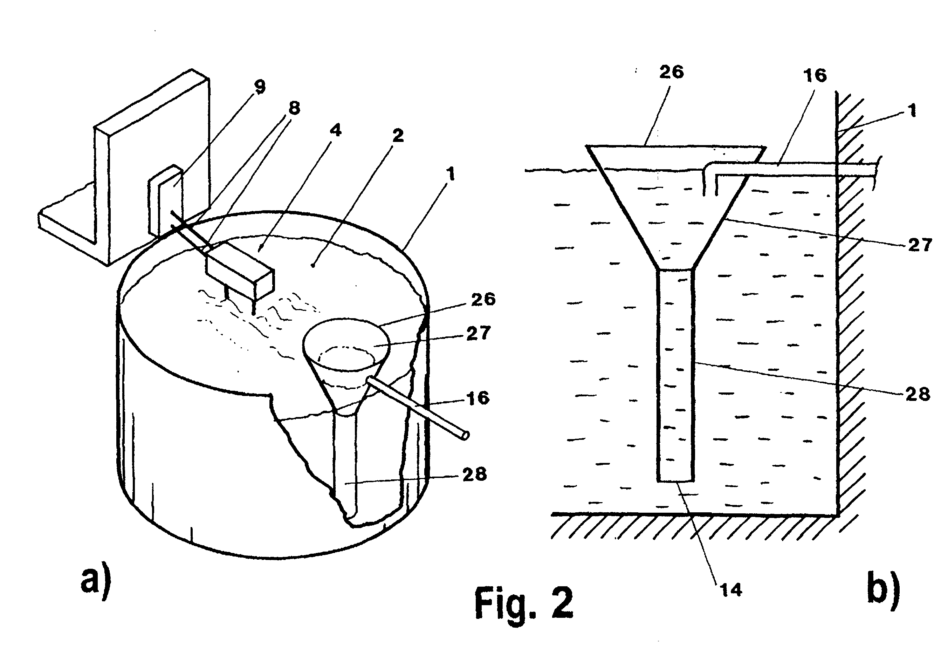

Im Beckenteil, der der Rührvorrichtung abgewandt ist, befindet sich die Nachklärzone 13. Sie besteht aus einem trichterförmigen Element 25, das näher beschrieben ist anhand der Fig. 2 a, b und 3 a, b. Hier setzt sich der Klärschlamm ab und wird kontinuierlich oder periodisch mit Hilfe einer Pumpe 18 über eine Leitung 19, die unterhalb des trichterförmigen Elementes 25 angeordnet ist, abgesaugt und in das Becken 1 zurückgefördert.

Eine gleiche Leitung 19 befindet sich ebenfalls an der Sohle des Beckens 1. Sobald das Schlammvolumen eine gewisse anlagespezifische Menge überschreitet, besteht die Möglichkeit, den Ueberschuss-Schlamm mittels einer Pumpe 20 aus der Anlage abzupumpen und der weiteren Verwertung zuzuführen.

Aus der Nachklärzone 13 wird das geklärte Abwasser von einer Rohrleitung 16 übernommen und dem Vorfluter 17 zugeführt. Obwohl die erfindungsgemässe Vorrichtung anhand einer Anlage für etwa 5 ö 10 EGW beschrieben wurde, lässt sich das Ein-Beckenverfahren anwenden bis zu Anlagen für ca. 150 EGW. Soll entweder die Anlage über diese Anschlusswerte hinaus vergrössert werden - etwa bei Vergrösserung des Einzugsgebietes oder bei dichter werdender Besiedelung - oder ist von Anfang an eine grössere Anlage geplant, so wird die beschriebene Anlage einfach durch eine zweite mit im wesentlichen gleicher Bauart ergänzt. Da die Anlagen vorzugsweise als GFK-Module ausgeführt sind, halten sich notwendige Bauarbeiten am Ort in engen Grenzen und sind im wesentlichen auf den Aushub beschränkt, falls die Anlage unter Boden abgesenkt werden soll. Das Betriebsverfahren besteht darin, dass das zu klärende Abwasser 2 nach Passieren eines Rechens 24 einem einzigen Becken mit Belebtschlamm zugeführt wird, welches mit einer inversionskinematischen Rührvorrichtung 4 ausgerüstet ist. Zum Betrieb der aeroben Phase wird die Rührvorrichtung so eingestellt, dass sie - in Ruhe - etwa zu 1/3 der Höhe des Rührkörpers, dem Oloid 6, in das Abwasser 2 eingetaucht ist, wobei die Drehzahl der Achsen 12 der Rührvorrichtung 4 etwa 35 ö 120 U/min beträgt. Der Uebergang von der aeroben zur anoxischen Phase erfolgt zeit- oder parametergesteuert und wird dadurch bewirkt, dass die Rührvorrichtung 4 soweit in das Abwasser 2 abgesenkt wird bis das Oloid 6 mit mindestens soviel Abwasser überdeckt ist, als seiner eigenen Höhe entspricht. Die Drehzahl der Achsen 12 liegt in der anoxischen Denitrifikationsphase typisch zwischen 25 ö 90 U/min. Wenn beispielsweise nachts wenig neues Abwasser 2 in das Becken 1 einströmt, so wird nach eineiger Zeit der O₂-Pegel ansteigen. Dies kann dazu benützt werden, um über die Steuerung 7 die Rührvorrichtung 4 abzusenken. Wenn tagsüber der Zufluss von Abwasser gross ist, wird der Uebergang von der aeroben zur anoxischen Phase vorzugsweise zeitgesteuert bewirkt; damit folgen sich das Absenken und Wiederanheben zyklisch. Die Längen der Zyklen sind abhängig von der Art und Zusammensetzung des Abwassers 2 und werden für jede Anlage individuell eingestellt.

Der sich absetzende Klärschlamm bleibt in der Anlage und wird durch eine Rohrleitung 19 mittels einer Pumpe 18 wieder, intermittierend oder kontinuierlich, in das zu klärende Abwasser 2 eingebracht.

Periodisch - alle 3 bis 4 Monate - wird der Ueberschuss-Schlamm mittels einer Pumpe aus der Anlage entfernt und weiterer Bearbeitung oder Verwendung zugeführt.

Das Becken 1, dessen Längsschnitt in Fig. 1 dargestellt ist, kann rechteckigen, polygonalen oder kreisförmigen Grundriss aufweisen; vorzugsweise sind, bei an sich rechteckigem Grundriss, die Ecken abgerundet oder angefast ausgeführt, um strömungstechnisch keine Toträume entstehen zu lassen.

Fig. 2a zeigt, bei rundem Grundriss des Beckens 1, ein erstes Ausführungsbeispiel des trichterförmigen Elementes 25 in Perspektive, Fig. 26 im Längsschnitt. Es besteht aus einem runden Trichter 26, gegliedert in ein konisches Oberteil 27 und ein zylindrisches Unterteil 28. Das denitrifizierte Abwasser 2 steigt durch hydrostatischen Druck im zylindrischen Teil 28 hoch und gelangt in das konische Teil 27, in welchem die Strömungsgeschwindigkeit stark abnimmt. Dies begünstigt das Ausfallen und Absetzen der Schlammflocken, die durch das zylindrische Teil 28 nach unten schweben, sobald ihre Sinkgeschwindigkeit grösser ist, als die Strömungsgeschwindigkeit des Abwassers 2 im zylindrischen Teil 28.

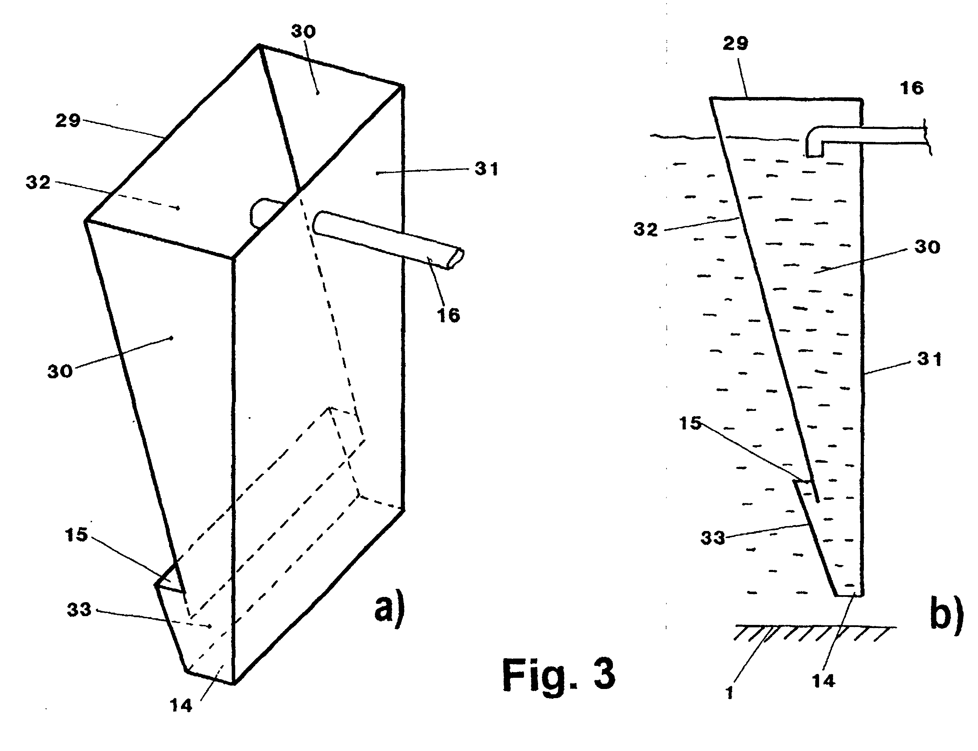

Fig. 3a zeigt ein zweites Ausführungsbeispiel des trichterförmigen Elementes 25 in Perspektive, Fig. 3b wiederum im Längsschnitt. Es besteht aus einem nach unten konisch zusammenlaufenden Kasten 29 mit zwei beispielsweise parallelen Seitenwänden 30 und einer beispielsweise vertikalen Rückwand 31. Die Rückwand 31 kann - beispeilsweise in einem rechteckigen Becken 1 - auch durch die Beckenwand gebildet sein. Gegenüber der vertikalen Rückwand 31 befindet sich eine erste geneigte Wand 32, welche im unteren Teil, in etwa 1/5 der Höhe, abgeschnitten ist. Sie etwas nach oben überlappend schliesst eine zweite geneigte Wand 33 an die erste an, dergestalt, dass ein Schlitz 15 offen bleibt, durch welchen das denitrifizierte Abwasser einfliessen und zwischen den Wänden 30, 31, 32 nach oben fliessen kann, wo es von der Rohrleitung 16 übernommen und dem Vorfluter 17 zugeführt werden kann. Der sich im Kasten 29 absetzende Schlamm schwebt nach unten und verlässt den Kasten 29 aus einer unteren Oeffnung 14, die oberhalb der genannten Leitung 19 für das Absaugen des Schlamms vorgesehen ist.

Die Vorteile der erfindungsgemässen Anlage und des Verfahrens liegen vor allem in folgenden Umständen:
- Kostengünstiger Bau der Anlage, vor allem bei Verwendung von werkgefertigten GFK-Modulen.
- Niedrige Investitionskosten dank der Verwendbarkeit des inversionskinematischen Rührers sowohl zur Unterstützung des Nitrifikations- als auch des Denitrifikationsprozesses.
- Kleiner Energiebedarf der Anlage; durch Photovoltaikelemente aufzubringen. Daher Unabhängigkeit vom öffentlichen Stromnetz.
- Das Oloid als Rührkörper erzeugt im Abwasser nur sehr kleine Scherkräfte; dies begünstigt das Entstehen grosser, sich leicht absetzender Schlammflocken.
- Leichte Ausbaubarkeit der Anlage durch Addition und Parallelschaltung gleicher Module.

## Patentansprüche

1. Kläranlage nach dem Belebtschlammverfahren für mehr als 5 Einwohnergleichwerte, **dadurch gekennzeichnet, dass**
- sie aus Moduln gleicher Bauart besteht und durch Parallelschalten solcher Moduln aufgebaut werden kann,
- ein Modul besteht aus einem einzigen Becken (1) mit einer Zuflussleitung (3) für ungeklärtes Abwasser (2) und einem Rechen (24), einer Rührvorrichtung (4), einer Nachklärzone (13) mit einer das geklärte Abwasser (2) wegführenden Rohrleitung (16), wobei die Rührvorrichtung (4) besteht aus einem Antrieb (5), welcher über zwei parallele Achsen (12) ein Oloid (6) inversionskinematisch in eine Taumelbewegung versetzt,
- eine Hebevorrichtung (9) vorhanden ist, mit welcher die Rührvorrichtung (4) in verschiedene Höhenlagen bezüglich der freien Oberfläche des Abwassers (2) gebracht werden kann,
- eine Steuerung (7) vorhanden ist für einerseits die Hebevorrichtung (9) und anderseits die Drehzahl der parallelen Achsen (12)der Rührvorrichtung (4),
- die Rührvorrichtung (4) am einen Ende des Beckens (1) und die Nachklärzone (13) am diesem gegenüberliegenden Ende des Beckens (1) angeordnet ist.

2. Kläranlage nach Patentanspruch 1, **dadurch gekennzeichnet, dass**
die Nachklärzone (13) besteht aus einem sich nach oben weitenden trichterförmigen Element (25), welches unten eine Oeffnung (14) aufweist, durch welche der Klärschlamm auf den Boden des Beckens (1) gelangt.

3. Kläranlage nach Patentanspruch 2, **dadurch gekennzeichnet, dass**
das trichterförmige Element (25) ein Trichter (26) ist mit im wesentlichen kreisrundem Querschnit, welcher Trichter (26) gegliedert ist in ein konisches sich nach oben weitende Oberteil (27) und ein unten daran anschliessendes zylindrisches Unterteil (28).

4. Kläranlage nach Patentanspruch 2, **dadurch gekennzeichnet, dass**
das trichterförmige Element (25) ein sich nach oben weitender konischer Kasten (29) mit im wesentlichen rechtekkigem Querschnitt ist, wobei eine erste geneigte Wand (32) des Kastens (29) im unteren Teil abgeschnitten ist und sich, die erste geneigte Wand (32) überlappend, eine zweite geneigte Wand (33) anschliesst, dergestalt dass zweischen diesen geneigten Wänden (32, 33) ein Schlitz (15) entsteht und offen bleibt, in welchen das nachzuklärende Abwasser (2) einströmen kann, und dass der Kasten (29) unten eine Oeffnung (14) aufweist, durch welche der Klärschlamm auf den Boden des Beckens (1) gelangt.

5. Kläranlage nach Patentanspruch 4, **dadurch gekennzeichnet, dass**
der Kasten (29) besteht aus zwei im wesentlichen parallelen und vertikalen Wänden (30), einer im wesentlichen vertikalen Rückwand (31) und den die vierte Seite des Kastens (29) bildenden geneigten Wänden (32, 33).

6. Kläranlage nach Patentanspruch 1, **dadurch gekennzeichnet, dass**
Leitungen (19) vorhanden sind, 'um den abgesetzten Klärschlamm mittels einer Pumpe (18) in das Becken (1) zurückzubefördern.

7. Kläranlage nach Patentanspruch 6, **dadurch gekennzeichnet, dass**
eine Pumpe (20) vorhanden ist, um den Klärschlamm durch die Leitungen (19) aus der Anlage abzupumpen.

8. Kläranlage nach Patentanspruch 1, **dadurch gekennzeichnet, dass**
ein O₂-Sensor im Becken (1) angeordnet und mit der Steuerung (7) verbunden ist.

9. Kläranlage nach Patentanspruch 1, **dadurch gekennzeichnet, dass**
die einzelnen Moduln aus GFK werkgefertigte Einheiten sind.

10. Verfahren zum Betrieb einer Kläranlage nach den Patentansprüchen 1 bis 9, **dadurch gekennzeichnet, dass**
- das zu klärende Abwasser (2) nach Passieren des Rechens (24) in das einzige Becken (1) einläuft, dort von der inversionskinematischen mit einem Oloid (6) ausgestatteten Rührvorrichtung (4) mit Luftsauerstoff angereichert und gleichzeitig umgewälzt wird, wobei das Oloid (6) etwa zu 1/3 seiner eigenen Höhe in das Abwasser eingetaucht ist, wodurch die im Abwasser (2) vorhandenen Bakterien mit Sauerstoff versorgt werden und den Nitrifikationsprozess bewirken,
- die genannte Rührvorrichtung (4) während des Nitrifikationsprozesses so gesteuert ist, dass ihre beiden parallelen Achsen (12) mit einer Drehzahl zwischen 35 U/min und 120 U/min umlaufen,
- die genannte Rührvorrichtung (4) durch die Hebevorrichtung (9) nach einiger Zeit um soviel tiefer in das Abwasser (2) abgesenkt wird, dass das Oloid (6) um mindestens seine eigene Höhe von Abwasser (2) überdeckt ist, wodurch der anoxisch verlaufende Denitrifikationsprozess bewirkt wird,
- die genannte Rührvorrichtung (4) während des Denitrifikationsprozesses so gesteuert ist, dass ihre beiden parallelen Achsen (12) mit einer Drehzahl zwischen 25 U/min und 90 U/min umlaufen,
- die Prozesse Nitrifikation und Denitrifikation im zeitlichen Wechsel vorgenommen werden.

11. Verfahren zum Betrieb einer Kläranlage nach Patentanspruch 10, **dadurch gekennzeichnet, dass**
das Absenken und Wiederanheben der Rührvorrichtung (4) zeitgesteuert vorgenommen wird.

12. Verfahren zum Betrieb einer Kläranlage nach Patentanspruch 10, **dadurch gekennzeichnet, dass**
das Absenken der Rührvorrichtung (4) durch den Anstieg des O₂ -Pegels im Abwasser gesteuert, das Wiederanheben der Rührvorrichtung (4) zeitgesteuert vorgenommen wird.

13. Verfahren zum Betrieb einer Kläranlage nach Patentanspruch 10, **dadurch gekennzeichnet, dass**
ein Uebergang von der Zeitsteuerung zur Steuerung über den O₂ -Pegel tageszeitabhängig vorgenommen werden kann.

## Claims

1. Sewage treatment plant incorporating the agitated sludge process for more than 5 population equivalents, **characterised in that**
- it consists of modules of identical design and can be set up by parallel installation of such modules,
- one module consists of a single tank (1) with an inflow line (3) for untreated effluent (2) and a screen (24), an agitator unit (4), a post-treatment zone (13) with a pipe (16) conducting away the treated effluent (2), whereby the agitator unit (4) consists of a drive unit (5) which by means of two parallel axles (12) an oloid (6) is caused to adopt an inversion-kinematic tumbling movement.
- a lifting device (9) is installed with which the agitator unit (4) can be put into various height levels with reference to the free surface of the effluent (2),
- a control (7) is installed for the lifting device (9) as well as for the rotational speed of the parallel axles (12) of the agitator unit (4),
- the agitator unit (4) is located at one end of the tank (1) and the post-treatment zone (13) at the opposite end of the tank (1).

2. Sewage treatment plant according to patent claim 1, **characterised in that** the post-treatment zone (13) consists of a funnel-shaped element (25) which widens towards the top and which has an opening (14) at the bottom through which the sewage sludge reaches the bottom of the tank (1).

3. Sewage treatment plant according to patent claim 2, **characterised in that** the funnel-shaped element (25) is a funnel (26) with an essentially circular cross-section, which funnel (26) is structured into a conical upper part (27) which widens towards the top and a cylindrical lower part (28) joining it at the bottom.

4. Sewage treatment plant according to patent claim 2, **characterised in that** the funnel-shaped element (25) is a conical box (29) widening towards the top with an essentially rectangular cross-section, in which a first sloped wall (32) of the box (29) is cut away in the lower part and is joined by a second sloped wall (33) overlapping the first sloped wall (32) in such a way that between these sloped walls (32, 33) a slot (15) is formed and remains open into which the effluent (2) to be post-treated can flow and that the box (29) has an opening (14) through which the sewage sludge can reach the bottom of the tank (1).

5. Sewage treatment plant according to patent claim 4, **characterised in that** the box (29) consists of two essentially parallel and vertical walls (30), an essentially vertical rear wall (31) and the sloped walls (32, 33) forming the fourth side of the box (29).

6. Sewage treatment plant according to patent claim 1, **characterised in that** pipes (19) are installed in order to return the settled sewage sludge by means of a pump (18) to the tank (1).

7. Sewage treatment plant according to patent claim 6, **characterised in that** a pump (20) is installed in order to pump off the sewage sludge from the plant through the pipes (19).

8. Sewage treatment plant according to patent claim 1, **characterised in that** an O₂ sensor is located in tank (1) and is connected with the control (7).

9. Sewage treatment plant according to patent claim 1, **characterised in that** the individual modules comprise units prefabricated in GRP.

10. Process for operating a sewage treatment plant according to patent claims 1 to 9, **characterised in that**
- the effluent to be treated (2) after passing through the screen (24) flows into the only tank (1), is enriched there with atmospheric oxygen by the inversion-kinematic agitator unit (4) equipped with an oloid (6) and at the same time is circulated, in which process the oloid (6) is immersed in the effluent to about 1/3 of its own height, as a result of which the bacteria present in the effluent (2) are supplied with oxygen and cause the nitrification process to take place,
- the mentioned agitator unit (4) is controlled in such a way during the nitrification process that its two parallel axles (12) rotate at a speed of between 35 rpm and 120 rpm,
- the mentioned agitator unit (4) is after some time lowered by the lifting device (9) so much deeper into the effluent (2) that the oloid (6) is covered by effluent (2) to the extent of at least its own height, which causes the anoxic denitrification process to take place,
- the mentioned agitator unit (4) is controlled in such a way during the denitrification process that its two parallel axles (12) rotate at a speed of between 25 rpm and 90 rpm,
- the nitrification and denitrification processes are carried out alternately.

11. Process for operating a sewage treatment plant according to patent claim 10, **characterised in that**
the lowering and raising of the agitator unit (4) is controlled time-wise.

12. Process for operating a sewage treatment plant according to patent claim 10, **characterised in that**
the lowering of the agitator unit (4) is controlled by the rise in the O₂ level in the effluent, and the raising of the lifting device (4) is controlled time-wise.

13. Process for operating a sewage treatment plant according to patent claim 10, **characterised in that** a transition from time control to control by means of the O₂ level depending on the time of day can be made.

## Revendications

1. Station d'épuration fonctionnant selon le procédé des boues activées et destinée à plus de 5 équivalents habitants, présentant les caractéristiques suivantes :
- la station se compose de modules de même construction et peut être agrandie par montage en parallèle de tels modules,
- un module se compose d'un seul bassin (1) avec une conduite d'arrivée (3) pour les eaux usées non épurées (2), d'une grille (24), d'un agitateur (4), d'une zone de décantation secondaire (13) avec une canalisation (16) pour extraire les eaux épurées (2) ; l'agitateur (4) se compose d'un dispositif d'entraînement (5) imprimant un mouvement giratoire à un oloïde (6) par l'intermédiaire de deux axes parallèles (12), selon le principe de la cinématique d'inversion,
- la station est équipée d'un dispositif de levage (9) permettant de placer l'agitateur (4) à différentes hauteurs par rapport à la surface libre des eaux usées (2),
- la station est équipée d'une commande (7) pilotant d'une part le dispositif de levage (9), et d'autre part la vitesse de rotation des axes parallèles (12) de l'agitateur (4),
- l'agitateur (4) est placé à une extrémité du bassin (1), et la zone de décantation secondaire (13) est disposée à l'autre extrémité du bassin (1).

2. Station d'épuration selon la revendication 1, présentant les caractéristiques suivantes :
la zone de décantation secondaire (13) se compose d'un élément en forme d'entonnoir (25) s'évasant vers le haut, muni dans sa partie inférieure d'une ouverture (14) à travers laquelle les boues d'épuration tombent au fond du bassin (1).

3. Station d'épuration selon la revendication 2, présentant les caractéristiques suivantes :
l'élément en forme d'entonnoir (25) est un entonnoir (26) à plan essentiellement circulaire, composé d'une partie supérieure conique (27) s'évasant vers le haut, et d'une partie inférieure cylindrique (28) qui fait suite à la première vers le bas.

4. Station d'épuration selon la revendication 2, présentant les caractéristiques suivantes :
l'élément en forme d'entonnoir (25) est un boîtier conique (29) s'évasant vers le haut et à plan essentiellement rectangulaire, une première paroi inclinée (32) du boîtier (29) étant découpée dans sa partie inférieure, et suivie d'une deuxième paroi inclinée (33) chevauchant la première paroi inclinée (32), de manière à former entre ces parois inclinées (32, 33) une fente (15) qui reste ouverte, et dans laquelle les eaux à décanter peuvent pénétrer, et le boîtier (29) étant muni vers le bas d'une ouverture (14) par laquelle la boue d'épuration tombe au fond du bassin (1).

5. Station d'épuration selon la revendication 4, présentant les caractéristiques suivantes :
le boîtier (29) se compose de deux parois essentiellement parallèles et verticales (30), d'une paroi arrière essentiellement verticale (31), et de parois inclinées (32, 33) formant le quatrième côté du boîtier (29).

6. Station d'épuration selon la revendication 1, présentant les caractéristiques suivantes :
la station est munie de canalisations (19) pour la recirculation de la boue d'épuration décantée à l'aide d'une pompe (18) dans le bassin (1).

7. Station d'épuration selon la revendication 6, présentant les caractéristiques suivantes :
la station est équipée d'une pompe (20) permettant d'extraire de l'installation la boue d'épuration à travers les canalisations (19).

8. Station d'épuration selon la revendication 1, présentant les caractéristiques suivantes :
un capteur à 02 est placé dans le bassin (1) et relié à la commande (7).

9. Station d'épuration selon la revendication 1, **caractérisée par le fait que**
les différents modules sont réalisés à partir d'unités de plastique renforcé à la fibre de verre réalisées en usine.

10. Procédé pour l'exploitation d'une station d'épuration selon les revendications 1 à 9, **caractérisé par le fait que** :
- après avoir passé la grille (24), les eaux usées à épurer (2) sont conduites dans le bassin unique (1), y sont enrichi d'oxygène atmosphérique et en même temps brassées par l'agitateur (4) équipé d'un oloïde (6) fonctionnant selon le principe de la cinématique d'inversion, l'oloïde (6) étant immergé environ au tiers de sa hauteur dans les eaux usées, alimentant ainsi en oxygène les bactéries présentes dans les eaux usées (2) et induisant le processus de nitrification,
- l'agitateur évoqué (4) est piloté pendant le processus de nitrification de manière à ce que ses deux axes parallèles (12) tournent à une vitesse comprise entre 35 t/m et 120 t/m,
- l'agitateur évoqué (4) est abaissé après un certain temps par le dispositif de levage (9) dans les eaux usées (2) de manière à ce que l'oloïde (6) soit recouvert par les eaux usées (2) sur une hauteur correspondant au minimum à sa propre hauteur, ce qui induit le processus de dénitrification anoxique,
- l'agitateur évoqué (4) est piloté pendant le processus de dénitrification de manière à ce que ses deux axes parallèles (12) tournent avec une vitesse comprise entre 25 t/m et 90 t/m,
- les processus de nitrification et de dénitrification se succèdent dans le temps.

11. Procédé pour l'exploitation d'une station d'épuration selon la revendication 10, **caractérisé par le fait que** :
l'abaissement et le relèvement de l'agitateur (4) est piloté en fonction du temps.

12. Procédé pour l'exploitation d'une station d'épuration selon la revendication 10, **caractérisé par le fait que** :
l'abaissement de l'agitateur (4) est piloté par l'augmentation du niveau d'O₂ dans les eaux usées, et le relèvement de l'agitateur (4) est piloté en fonction du temps.

13. Procédé pour l'exploitation d'une station d'épuration selon la revendication 10, **caractérisé par le fait que** :
un passage du pilotage en fonction du temps au pilotage en fonction du niveau de O₂ peut être effectué en fonction de l'heure du jour.
